# EUROPÄISCHE PATENTSCHRIFT

(11) **EP 3 468 429 B1**
(45) Veröffentlichungstag und Bekanntmachung des Hinweises auf die Patenterteilung: **11.09.2024**
(21) Anmeldenummer: 18705134.7
(22) Anmeldetag: 12.02.2018
(51) Int. Cl.: A47J 36/02, A47J 27/00

(54) **KOCHGESCHIRR MIT VERBESSERTER SANDWICHBAUWEISE UND VERRINGERTER BODENBEWEGUNG SOWIE HERSTELLVERFAHREN UND VERWENDUNG**
COOKWARE HAVING IMPROVED SANDWICH DESIGN AND REDUCED BASE MOVEMENT, AND METHOD OF PRODUCTION AND USE
USTENSILE DE CUISSON À STRUCTURE SANDWICH AMÉLIORÉE ET À MOUVEMENT RÉDUIT DU FOND, PROCÉDÉ DE FABRICATION ET UTILISATION ASSOCIÉS

(30) Priorität: 10.02.2017 DE 102017202168
(43) Veröffentlichungstag der Anmeldung: 17.04.2019
(73) Patentinhaber: WMF GmbH, 73312 Geislingen/Steige (DE)
(72) Erfinder: BOERNER, Cornelius, 73329 Kuchen (DE); MAYER, Roman, 73614 Schorndorf (DE); SCHOBLOCH, Jochen, 88422 Bad Buchau (DE)
(74) Vertreter: Pfenning, Meinig & Partner mbB
(86) Internationale Anmeldenummer: PCT/EP2018/053421
(87) Internationale Veröffentlichungsnummer: WO 2018/146301

(56) Entgegenhaltungen:
- EP-A1- 0 209 745
- EP-A1- 0 613 752
- EP-A1- 0 752 295
- EP-A1- 0 821 901
- EP-A1- 2 138 079
- DE-A1- 102012 012 608
- DE-A1- 3 716 966
- DE-T2- 60 114 251
- DE-U1- 202004 007 542

## Beschreibung

Die vorliegende Erfindung betrifft ein Kochgeschirr mit einer verbesserten Sandwichbauweise und einer verringerten Bodenbewegung, ein Verfahren zu dessen Herstellung und Verwendungen des entsprechenden Kochgeschirrs.

Pfannen, Töpfe, Druckkochtöpfe und ähnliches Kochgeschirr weisen üblicherweise einen Sandwichaufbau auf. Das bedeutet, dass unterhalb der Grundfläche des Kochgeschirrgrundkörpers eine sogenannte Abschlussronde angeordnet ist und zwischen dieser Abschlussronde und der Unterseite der Grundfläche eine Zwischenlage platziert ist, die aus einem gut wärmeleitfähigen Material besteht. Die Abschlussronde weist bei der Sandwichbauweise fernerhin eine formschlüssige Verbindung zu der Grundflächenunterseite des Grundkörpers auf. Dadurch ist die Zwischenlage vollständig zwischen der Grundflächenunterseite des Grundkörpers und der Abschlussronde eingekapselt.

Als Material wird für den Grundkörper aufgrund der guten Umform- und Oberflächeneigenschaften ein Chrom-Nickel-Stahl, wie beispielsweise Stahl der Sorte X5CrNi18-10 (DIN Werkstoffnummer 1.4301) verwendet. Die Zwischenlage besteht typischerweise aus einer weichen, gut wärmeleitenden und leicht umformbaren Aluminiumlegierung, wie beispielsweise Al99,5 (DIN Werkstoffnummer 3.0255). Die Abschlussronde wird heutzutage - zur Sicherstellung der Induktionstauglichkeit - aus einem ferritischen nichtrostenden Edelstahl, wie zum Beispiel X6Cr17 (DIN Werkstoffnummer 1.4016), gefertigt.

Ein Kochgeschirr mit diesen Materialien und dem oben genannten Sandwichaufbau besitzt jedoch einen entscheidenden Nachteil. Der Stahl des Grundkörpers besitzt im Temperaturbereich von 20 bis 200°C einen höheren thermischen Ausdehnungskoeffizienten als der Stahl der Abschlussronde. Während der thermische Ausdehnungskoeffizient von Stahl mit der Werkstoffnummer 1.4301 etwa 16,5 ·10⁻⁶ K⁻¹ entspricht, weist der Stahl mit der Werkstoffnummer 1.4016 nur einen thermischen Ausdehnungskoeffizienten von etwa 10,0 ·10⁻⁶ K⁻¹ auf. Die Unterseite des Grundkörpers dehnt sich somit beim Erhitzen des Kochgeschirrs stärker aus als die Abschlussronde. Dies löst eine Verformung des Bodens aus, die sich in einer Bodenbewegung bemerkbar macht. Die Bodenbewegung kann gemäß der Vorschrift in Kapitel 4.3.2. der DIN-Norm 44904:1989-11 bestimmt werden. Die Bodenbewegung ist die vertikale Durchbiegung des Bodens bei Erwärmung des Kochgeschirrs gemäß genannter Norm.

Durch die stärkere Ausdehnung des Topfkörpers im Vergleich zur Abschlussronde wölbt sich der Kochgeschirrboden beim Erhitzen des Kochgeschirrs auf einer Herdplatte zunehmend mit steigender Temperatur und zwar in die von der Herdplatte abgewandte Richtung. Dadurch wird der Kontakt des Kochgeschirrbodens zu der Herdplatte erheblich beeinträchtigt. Es bildet sich ein isolierendes Luftpolster zwischen Herdplatte und Kochgeschirrunterseite und die Wärmeübertragung leidet.

Um wirtschaftliches und energiesparendes Kochen zu ermöglichen, sollte aber eine optimale Ausnutzung der zugeführten Wärme gewährleistet werden. Dies setzt voraus, dass der Boden des Geschirrs während des Kochens, also im heißen Zustand, plan auf der Kochstelle aufliegt.

Um dies zu realisieren, wird im Stand der Technik vorgeschlagen, Kochgeschirr mit einem vorgeformten Boden bereitzustellen. Die Unterseite des Grundkörpers, die Abschlussronde und die dazwischen eingekapselte Zwischenlage werden kalibriert.

Die WO 2005/021179 A1 beschreibt beispielsweise ein Verfahren zur Herstellung eines Kochgeschirrs mittels einer Weg-gesteuerten Presseinrichtung. Die Presseinrichtung ermöglicht es, eine reproduzierbare Einbeulung des Kochgeschirrbodens zu erreichen. Die Bodenbewegung kann durch diese Maßnahme jedoch nicht eliminiert werden - lediglich der Wert der Bodendurchbiegung bei Raumtemperatur kann somit angepasst werden.

Allerdings stellt die Ausbeulung des Kochgeschirrbodens einen zusätzlichen Schritt im Herstellverfahren dar. Die Herstellungsverfahren für solche ausgebeulten Kochtöpfe sind dadurch sehr aufwendig. Nachteilig ist auch, dass eine optimale Auflage des Kochtopfes auf der Kochstelle nur in einem beschränkten Temperaturbereich erreicht werden kann, was seine Verwendung erheblich einschränkt.

Die EP 0 752 295 A1 offenbart ein Verfahren, bei dem auf den Boden eines Geschirrs aus Edelstahl eine wärmeleitende Platte mit einer Temperatur knapp unterhalb ihres Schmelzpunktes gestanzt wird und gleichzeitig ein Außenmantel aus induktionsgeeigneten Edelstahl so auf die Platte gestanzt wird, dass der Raum zwischen Boden und Mantel nahezu vollständig mit dem Plattenmaterial ausgefüllt ist und der Rand des Mantels mit einem umgebogene Randbereich des Geschirrbodens abgedichtet ist.

Die DE 601 14 251 T2 offenbart ein Kochgefäß mit einem Boden aus einem mehrschichtigen Material und einer Seitenwand, wobei das mehrschichtige Material von der Gefäßaußenseite zur Gefäßinnenseite nacheinander folgendes aufweist: einen Außenteil, der eine ersten Dicke aufweist und aus einer Schicht aus einer ferromagnetischen Nickelbasislegierung mit einer Curie-Temperatur zwischen 30 und 350°C und einem Wärmeausdehnungskoeffizienten von größer oder gleich 6,5·10⁻⁶ K⁻¹ besteht, und einem Kern, der eine zweite Dicke aufweist und mindestens eine Schicht ausgewählt aus Aluminium, Aluminiumlegierung und Kupfer umfasst.

Ausgehend von diesen Nachteilen aus dem Stand der Technik war es Aufgabe der vorliegenden Erfindung, ein Kochgeschirr mit einem verbesserten Sandwichaufbau bereitzustellen, das über einen breiten Temperaturbereich von mindestens 100°C eine gleichförmig planare Bodenfläche aufweist und einen optimalen Kontakt zur Herdplatte zulässt. Außerdem sollte ein Verfahren zur Herstellung eines solchen Kochgeschirrs angegeben werden.

Diese Aufgabe wird bezüglich des Kochgeschirrs mit den Merkmalen des Patentanspruches 1 gelöst. Bezüglich des Herstellungsverfahrens wird die Aufgabe mit den Merkmalen des Anspruches 14 gelöst.

Das erfindungsgemäße Kochgeschirr weist einen Grundkörper und eine bodenseitig vom Grundkörper angeordnete und mit dem Grundkörper formschlüssig verbundene Abschlussronde sowie eine zumindest bereichsweise zwischen Grundkörper und Abschlussronde angeordnete Zwischenlage auf, wobei die Abschlussronde aus einem anderen Stahl als der Grundkörper besteht, dadurch gekennzeichnet, dass der Grundkörper und die Abschlussronde aus Materialien bestehen, deren Wärmeausdehnungskoeffizienten sich um maximal 20,0% voneinander unterscheiden. Das erfindungsgemäße Kochgeschirr ist dadurch gekennzeichnet, dass die Abschlussronde und der Grundkörper jeweils eine Grundfläche umfassen, die bei einer Temperatur von 20°C eine konkave Bombierung aufweist, wobei die Bombierung jeweils so ausgeprägt ist, dass die Stichhöhe im Temperaturbereich von 50°C bis 250°C maximal 0,3 mm beträgt.

Überraschenderweise wurde gefunden, dass der Boden eines solchen Kochgeschirrs nicht vorgeformt werden muss, um ein planes Aufliegen auf der Herdplatte bei hohen Temperaturen zu gewährleisten. Durch die ähnlichen Wärmeausdehnungskoeffizienten der Materialien dehnen sich Abschlussronde und Grundkörper in dem gleichen Maß aus. Dadurch treten in dem Kochgeschirr beim Erhitzen einerseits weniger Spannungen auf. Die Materialien erfahren dadurch weniger Belastungen und es kommt zu weniger Materialdefekten (Risse, Brüche). Das Kochgeschirr wird dadurch langlebiger. Andererseits wird die Bodenbewegung des Kochgeschirrs beim Erhitzen verringert und eine Wölbung des Bodens wird vermieden.

Im Unterschied zu dem aus dem Stand der Technik bekannten Kochgeschirr, das mit steigender Temperatur eine kontinuierlich zunehmende konkave Bombierung zeigt, d.h. die Abschlussronde bewegt sich in ihrem Zentrum von der Herdoberfläche weg, tritt beim erfindungsgemäßen Kochgeschirr der umgekehrte Effekt auf, d.h. die bei Raumtemperatur vorliegende leichte konkave Bombierung baut sich bei steigender Temperatur ab und die Abschlussronde zeigt bei Temperaturen oberhalb ab 50°C eine nahezu planare Oberfläche und damit optimale Auflagefläche auf der Herdoberfläche.

Noch bessere Eigenschaften lassen sich erreichen, wenn der Grundkörper und die Abschlussronde aus Materialien bestehen, deren Wärmeausdehnungskoeffizienten sich um 0,0% bis 10,0 % oder um 0,0% bis 6,0%, voneinander unterscheiden.

Bevorzugt betragen Wärmeausdehnungskoeffizient des Grundkörpers und Wärmeausdehnungskoeffizient der Abschlussronde bei Temperaturen zwischen 20°C und 200°C von 9,0 ·10⁻⁶ bis 12,0 ·10⁻⁶ K⁻¹, besonders bevorzugt von 10,0·10⁻⁶ bis 11,0 ·10⁻⁶ K⁻¹.

Diese Wärmeausdehnungskoeffizienten sind um mehr als 35% geringer als der Wärmeausdehnungskoeffizient des üblicherweise für den Grundkörper verwendeten Chrom-Nickel-Stahls.

In einer weiteren Ausführungsform bestehen der Grundkörper und die Abschlussronde aus einem ferromagnetischen Edelstahl, bevorzugt aus einem chromhaltigen ferritischen Edelstahl, wobei der Chromgehalt in dem Edelstahl des Grundkörpers und in dem Edelstahl der Abschlussronde besonders bevorzugt mindestens 15,5 Gew.-% beträgt.

Vorteilhaft ist, wenn der Chromgehalt in dem Edelstahl des Grundkörpers mindestens 20 Gew.-% beträgt, wobei es besonders bevorzugt ist, wenn der Edelstahl des Grundkörpers ein Stahl mit der Werkstoffnummer 1.4613 (X2CrTi24), 1.4622 (X2CrTiNbVCu22) und/oder 1.4607 (X2CrNbTi20) ist.

Weiterhin besteht die Abschlussronde des Kochgeschirrs bevorzugt aus einem Stahl mit der Werkstoffnummer 1.4016 (X6Cr17), 1.4520 (X2CrTi17), 1.4510 (X3CrTi17), 1.4613 (X2CrTi24), 1.4622 (X2CrTiNbVCu22) und/oder 1.4607 (X2CrNbTi20).

Erfindungsgemäß besteht die Abschlussronde aus einem anderen Stahl als der Grundkörper des Kochgeschirrs. Dementsprechend bestehen Grundkörper und Abschlussronde des Kochgeschirrs in einer Ausführungsform der Erfindung aus Materialien, deren Wärmeausdehnungskoeffizienten sich um 0,5% bis 10,0 % oder um 1,0% bis 6,0%, voneinander unterscheiden.

Die Werkstoffnummer des Stahls richtet sich nach der DIN EN 10027-2:2015-07. Die Bezeichnung des Stahls in Klammern folgt der Systematik der DIN EN 10027-1:2017-01.

Die Zwischenlage kann eine Schicht mit einer Schichtdicke von 2,0 bis 10,0 mm, bevorzugt von 4,0 bis 8,0 mm sein, wobei die Schicht besonders bevorzugt eine überwiegend flache und nicht gewellte oder angewinkelte Schicht ist und ganz besonders bevorzugt zwischen der Abschlussronde und dem Grundkörper eingekapselt ist.

Die Abschlussronde kann eine Grundfläche und einen gebogenen oder angewinkelten Rand aufweisen, wobei die Grundfläche eine Schicht mit einer Schichtdicke von 0,4 bis 1,0 mm ist.

Durch die Biegung und das Anwinkeln des Randes der Abschlussronde kann die formschlüssige Verbindung zwischen Grundkörper und Abschlussronde und das Einkapseln der Zwischenlage einfacher realisiert werden. Äußere mechanische Einflüsse auf die Zwischenlage können vollständig vermieden werden. Stattdessen nimmt die Abschlussronde Stöße auf und schirmt die Zwischenlage vor einem Kontakt mit scharfkantigen Gegenständen ab.

Bevorzugt weist sowohl die Zwischenlage als auch die Abschlussronde glatte Oberflächen ohne Strukturierung oder Armierung auf. Des Weiteren ist es vorteilhaft, wenn die Schichtdicke der Abschlussronde und der Zwischenlage eine maximale Standardabweichung von 0,05 mm, insbesondere von 0,03 mm, aufweist.

Die Zwischenlage besteht vorzugweise aus einem Material mit einer Wärmeleitfähigkeit von mindestens 160 W/mK, besonders bevorzugt von mindestens 190 W/mK, insbesondere aus einem Material ausgewählt aus der Gruppe bestehend aus Aluminium, Kupfer, Magnesium oder einer Legierungen dieser Elemente.

Besonders bevorzugt besteht die Zwischenlage aus einer weichen, gut wärmeleitenden und leicht umformbaren Aluminiumlegierung, wie beispielsweise Al99,5 (DIN Werkstoffnummer 3.0255).

In einer bevorzugten Ausführungsform ist das Kochgeschirr einseitig offener, zylindrisch geformter Topf oder eine einseitig offene, zylindrisch geformte Pfanne, wobei der Topf oder die Pfanne besonders bevorzugt eine Grundfläche mit einer ovalen, runden oder rechteckigen Form aufweist und die Grundfläche ganz besonders bevorzugt eine Fläche von 150 bis 1200 cm² aufweist. Zudem kann der Topf oder die Pfanne Henkel zur vereinfachten Handhabbarkeit und einen Deckel zur Abdeckung der Öffnung aufweisen.

In einer bevorzugten Ausführungsform bildet der Grundkörper des Kochgeschirrs zumindest bereichsweise eine direkte Kontaktfläche mit der Zwischenlage bildet und die Zwischenlage mit der dem Grundkörper abgewandten Seite eine direkte Kontaktfläche mit der Abschlussronde bildet. In dieser bevorzugten Variante des Kochgeschirrs ist die Abfolge der Kochgeschirrkomponenten von der Herdplatte aus gesehen: Abschlussronde, Zwischenlage und Grundkörper. Weitere Zwischenschichten sind nicht vorhanden.

Erfindungsgemäß umfassen die Abschlussronde und der Grundkörper jeweils eine Grundfläche, die bei einer Temperatur von 20°C eine konkave Bombierung aufweist, wobei die Bombierung jeweils so ausgeprägt ist, dass die Stichhöhe im Temperaturbereich von 50°C bis 250°C maximal 0,3 mm, insbesondere maximal 0,2mm, beträgt.

Eine konkave Bombierung meint dabei eine Wölbung der Grundfläche von Grundkörper und Abschlussronde in Richtung des Kochtopfinneren. Zwischen der bombierten Grundfläche der Abschlussfläche und der Herdplatte besteht bei Raumtemperatur ein Hohlraum. Der nicht erhitzte Kochtopf liegt auf planaren Ebenen im Randbereich der Grundfläche der Abschlussronde auf. Durch den großen Umfang am Rand der Grundfläche kann ein stabiler Stand gewährleistet werden.

Das Kochgeschirr weist vorteilhafterweise oberhalb von 50°C, im Temperaturbereich von 50°C bis 250°C, eine Bodenbewegung von maximal 0,1 mm, insbesondere von maximal 0,05 mm, auf. Bezogen auf den Durchmesser des Grundkörpers bzw. der Abschlussronde bedeutet dies, das die Bodenbewegung weniger als 0,3 %, bevorzugt weniger als 0,2 % und besonders bevorzugt weniger als 0,18 % dieses Durchmessers beträgt.

Diese Eigenschaft führt dazu, dass das Kochgeschirr für alle Kochvorgänge eine planare Auflagefläche aufweist. Die Wärmeübertragung von der Herdplatte auf das Kochgeschirr ist so bei sehr hohen Temperaturen, die zum Beispiel beim Frittieren benötigt werden, und bei niedrigen Temperaturen, die zum Garen oder Warmhalten angewendet werden, gleich gut. Dies stellt einen wesentlichen Vorteil gegenüber dem aus dem Stand der Technik bekannten Kochgeschirr dar, da sich das aus dem Stand der Technik bekannte Kochgeschirr bei Temperaturen von mehr als 50°C kontinuierlich von der Herdoberfläche wegbewegt, was zur Folge hat, dass eine optimale Auflagefläche des Kochgeschirrs auf der Herdoberfläche nur für einen definierten Temperaturpunkt möglich ist. Mit dem erfindungsgemäßen Kochgeschirr ist es hingegen möglich, dass die optimale Auflagefläche für ein breites Temperaturband von etwa 50 bis 250°C gegeben ist.

Das erfindungsgemäße Verfahren zur Herstellung des oben beschriebenen Kochgeschirrs ist dadurch gekennzeichnet, dass zunächst ein einseitig offener, zylindrischer Grundkörper aus einem chromhaltigen ferritischen Edelstahl hergestellt wird und der Grundkörper anschließend an der Unterseite der Grundfläche zumindest bereichsweise formschlüssig mit einer Abschlussronde verbunden wird, wobei zwischen Abschlussronde und Grundkörper zumindest bereichsweise eine Zwischenlage angeordnet wird.

Der Grundkörper wird dabei aus einem Materialstück des Edelstahls geformt.

Bei dem Verfahren zur Herstellung des Kochgeschirrs ist es weiterhin bevorzugt, wenn eine Kombination mehrerer Techniken verwendet wird, wobei der Grundkörper bevorzugt durch Tiefziehen, Streckziehen oder Druckeinwirkung, die Verbindung zwischen der Abschlussronde und der Grundflächenunterseite des Grundkörpers bevorzugt durch Schweißen, Löten und/oder Aufschlagen und die Bombierung der Abschlussronde bevorzugt durch Pressen hergestellt wird.

Besonders bevorzugt ist die Technik des Aufschlagens. Bei dieser Technik muss weder zusätzliches Material eingebracht werden noch werden hohe Temperaturen benötigt.

Das erfindungsgemäße Kochgeschirr kann zur Zubereitung von Speisen oder zum Erhitzen von Lebensmitteln unter Einsatz eines Gasherdes, Elektroherdes oder Induktionsherdes dienen.

Die vorliegende Erfindung wird anhand der nachfolgenden Figur näher erläutert, ohne die Erfindung auf die darin gezeigten Parameter zu beschränken.

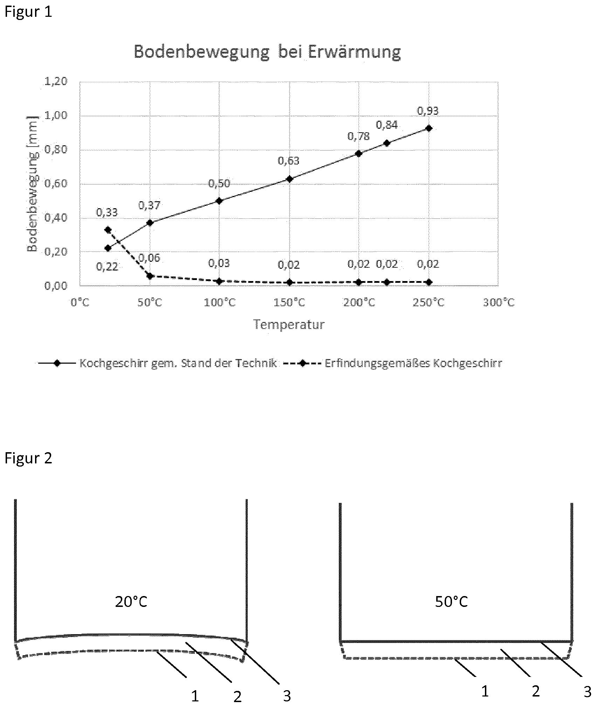

Figur 1 zeigt die Bodenbewegung beim Erhitzen eines erfindungsgemäßen Kochgeschirrs und eines herkömmlichen Kochgeschirrs. Die Bodenbewegung wurde dabei gemäß der Vorschrift in Kapitel 4.3.2. der DIN-Norm 44904:1989-11 bestimmt.

Es ist zu erkennen, dass bei dem erfindungsgemäßen Kochgeschirr im Temperaturbereich zwischen 20 und 250°C eine Bodenbewegung von weniger als 0,4 mm (0,31 mm, stattfindet. Das Kochgeschirr aus dem Stand der Technik zeigt im gleichen Temperaturbereich eine Bodenbewegung von mehr als 0,7 mm (0,71 mm). Zudem nimmt ist die Bodenbewegung bei dem Kochgeschirr aus dem Stand der Technik über den gesamten Temperaturbereich gleichförmig. Der Wert der Bodenbewegung nimmt linear mit der Temperatur zu. Das erfindungsgemäße Kochgeschirr zeigt hingegen nur im Bereich von 20 bis 50°C eine starke Bodenbewegung.

Im Bereich von 50-250°C weist das erfindungsgemäße Kochgeschirr eine vernachlässigbare Bodenbewegung auf, die weniger als 0,05 mm (0,04 mm) beträgt. Dadurch kann eine optimale Herdauflagefläche erzeugt werden, insbesondere bei Temperaturen von mehr als 50°C.

Um eine vergleichbar gute Kontaktfläche bei herkömmlichem Kochgeschirr bereitzustellen, müsste das herkömmliche Kochgeschirr einen bei Raumtemperatur nach außen (in Richtung der Herdplatte) gewölbten Boden aufweisen. Dies ist einerseits nachteilig, da Produkttests wie beispielsweise von Stiftung Warentest keine in dieser Weise gewölbten Böden bei Kochgeschirr zulassen. Andererseits könnte selbst ein solches Kochgeschirr aufgrund der linear von der Temperatur abhängigen Bodenbewegung nur innerhalb eines kleinen Temperaturbereichs von weniger als 10°C eine optimale Kontaktfläche zur Herdplatte gewährleisten.

Grund für die bei dem erfindungsgemäßen Kochgeschirr vergleichsweise starke Bodenbewegung im Bereich von 20 bis 50°C ist die inhomogene Temperaturverteilung in dem Boden des Kochgeschirrs, die am Anfang des Aufheizvorganges vorliegt.

Figur 2 zeigt das Profil des erfindungsgemäßen Kochgeschirrs schematisch bei einer Temperatur von 20°C (links) und 50°C (rechts).

In der linken Darstellung ist zu erkennen, dass die Abschlussronde (1) und der Grundkörper (3) bei 20°C eine Bombierung aufweisen. Sowohl die Abschlussronde als auch der Boden des Grundkörpers sind in Richtung des Kochgeschirrinneren gewölbt. Die Zwischenlage befindet sich in dem Zwischenraum (2) zwischen der Abschlussronde (1) und dem Grundkörper.

Die rechte Darstellung zeigt, dass das Kochgeschirr bei 50°C seine anfängliche Bombierung nahezu vollständig verloren hat. Sowohl die Wölbung der Abschlussronde (1) als auch die Wölbung des Bodens des Grundkörpers (3) wurden durch die Ausdehnung bei Erwärmung und die resultierende Bodenbewegung kompensiert. Die Abschlussronde (1) und der Grundkörper (3) weisen nun in guter Näherung eine planare Schicht auf.

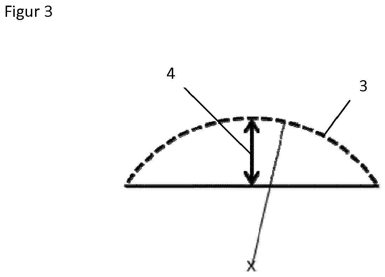

Figur 3 zeigt an einem schematischen Ausschnitt der Abschlussronde, wie die Stichhöhe (4) zu bestimmen ist. Dazu ist die Bombierung bzw. Wölbung der Abschlussronde (3) stark übertrieben dargestellt. Die Stichhöhe (4) ist die Entfernung des obersten Punktes der Wölbung bis zu einer gedachten Ebene, die zwischen den untersten Punkten der Abschlussronde aufgespannt wird.

## Patentansprüche

1. Kochgeschirr mit
einem Grundkörper (3) und
einer bodenseitig vom Grundkörper angeordneten und mit dem Grundkörper formschlüssig verbundenen Abschlussronde (1) sowie
einer zumindest bereichsweise zwischen Grundkörper und Abschlussronde angeordneten Zwischenlage (2),
wobei die Abschlussronde (1) aus einem anderen Stahl als der Grundkörper (3) besteht,
wobei der Grundkörper (3) und die Abschlussronde (1) aus Materialien bestehen, deren Wärmeausdehnungskoeffizienten sich um maximal 20,0 % voneinander unterscheiden,
**dadurch gekennzeichnet, dass** die Abschlussronde (1) und der Grundkörper (3) jeweils eine Grundfläche umfassen, die bei einer Temperatur von 20°C eine konkave Bombierung aufweist, wobei die Bombierung jeweils so ausgeprägt ist, dass die Stichhöhe (4) im Temperaturbereich von 50°C bis 250°C maximal 0,3 mm beträgt.

2. Kochgeschirr nach Anspruch 1,
**dadurch gekennzeichnet, dass** der Grundkörper (3) und die Abschlussronde (1) aus Materialien bestehen, deren Wärmeausdehnungskoeffizienten sich um 0,0% bis 10,0 %, bevorzugt um 0,0% bis 6,0%, voneinander unterscheiden.

3. Kochgeschirr nach einem der vorhergehenden Ansprüche,
**dadurch gekennzeichnet, dass** der Wärmeausdehnungskoeffizient des Grundkörpers (3) und der Wärmeausdehnungskoeffizient der Abschlussronde (1) bei Temperaturen zwischen 20°C und 200°C von 9,0 ·10⁻⁶ bis 12,0 ·10⁻⁶ K⁻¹, bevorzugt von 10,0 ·10⁻⁶ bis 11,0 ·10⁻⁶ K⁻¹ betragen.

4. Kochgeschirr nach einem der vorhergehenden Ansprüche, **dadurch gekennzeichnet, dass** der Grundkörper (3) und die Abschlussronde (1) aus einem ferromagnetischen Edelstahl, bevorzugt aus einem chromhaltigen ferritischen Edelstahl bestehen, wobei der Chromgehalt in dem Edelstahl des Grundkörpers (3) und in dem Edelstahl der Abschlussronde (1) besonders bevorzugt mindestens 15,5 Gew.-% beträgt.

5. Kochgeschirr nach einem der vorhergehenden Ansprüche, **dadurch gekennzeichnet, dass** der Edelstahl des Grundkörpers (3) einen Chromgehalt von mindestens 20 Gew.-% aufweist, wobei der Edelstahl des Grundkörpers (3) bevorzugt ein Stahl mit der Werkstoffnummer 1.4613 (X2CrTi24), 1.4622 (X2CrTiNbVCu22) und/oder 1.4607 (X2CrNbTi20) ist.

6. Kochgeschirr nach einem der vorhergehenden Ansprüche, **dadurch gekennzeichnet, dass** die Abschlussronde (1) aus einem Stahl mit der Werkstoffnummer 1.4016 (X6Cr17), 1.4520 (X2CrTi17), 1.4510 (X3CrTi17), 1.4613 (X2CrTi24), 1.4622 (X2CrTiNbVCu22) und/oder 1.4607 (X2CrNbTi20) besteht.

7. Kochgeschirr nach einem der vorhergehenden Ansprüche, **dadurch gekennzeichnet, dass** Abschlussronde (1) eine Grundfläche und einen gebogenen oder angewinkelten Rand aufweist, wobei die Grundfläche eine Schicht mit einer Schichtdicke von 0,4 bis 1,0 mm ist.

8. Kochgeschirr nach einem der vorhergehenden Ansprüche, **dadurch gekennzeichnet, dass** die Zwischenlage (2) eine Schicht mit einer Dicke von 2,0 bis 10,0 mm, bevorzugt von 4,0 bis 8,0 mm, ist, besonders bevorzugt eine überwiegend flache und nicht gewellte oder angewinkelte Schicht, wobei die Schicht ganz besonders bevorzugt zwischen der Abschlussronde (1) und dem Grundkörper (3) eingekapselt ist.

9. Kochgeschirr nach einem der vorhergehenden Ansprüche, **dadurch gekennzeichnet, dass** die Zwischenlage (2) aus einem Material mit einer Wärmeleitfähigkeit von mindestens 160 W/mK, bevorzugt von mindestens 190 W/mK, insbesondere aus einem Material ausgewählt aus der Gruppe bestehend aus Aluminium, Kupfer, Magnesium oder einer Legierungen dieser Elemente, besteht.

10. Kochgeschirr nach einem der vorhergehenden Ansprüche, **dadurch gekennzeichnet, dass** das Kochgeschirr ein einseitig offener, zylindrisch geformter Topf oder eine einseitig offene, zylindrisch geformte Pfanne ist, wobei der Topf oder die Pfanne bevorzugt eine Grundfläche mit einer ovalen, runden oder rechteckigen Form aufweist und die Grundfläche besonders bevorzugt eine Fläche von 150 bis 1200 cm² aufweist.

11. Kochgeschirr nach einem der vorhergehenden Ansprüche, **dadurch gekennzeichnet, dass** der Grundkörper (3) des Kochgeschirrs zumindest bereichsweise eine direkte Kontaktfläche mit der Zwischenlage (2) bildet und die Zwischenlage (2) mit der dem Grundkörper (3) abgewandten Seite eine direkte Kontaktfläche mit der Abschlussronde (1) bildet.

12. Kochgeschirr nach einem der vorhergehenden Ansprüche, **dadurch gekennzeichnet, dass** die Bombierung jeweils so ausgeprägt ist, dass die Stichhöhe (4) im Temperaturbereich von 50°C bis 250°C maximal 0,2 mm beträgt.

13. Kochgeschirr nach einem der vorhergehenden Ansprüche, **dadurch gekennzeichnet, dass** das Kochgeschirr oberhalb von 50°C, bevorzugt im Temperaturbereich von 50°C bis 250°C, eine Bodenbewegung von maximal 0,1 mm, insbesondere von maximal 0,05 mm, aufweist.

14. Verfahren zur Herstellung eines Kochgeschirrs nach einem der vorhergehenden Ansprüche, bei dem zunächst ein einseitig offener, zylindrischer Grundkörper (3) aus einem chromhaltigen ferritischen Edelstahl hergestellt wird und der Grundkörper (3) anschließend an der Unterseite der Grundfläche zumindest bereichsweise formschlüssig mit einer Abschlussronde (1) verbunden wird, wobei zwischen Abschlussronde und Grundkörper zumindest bereichsweise eine Zwischenlage (2) angeordnet wird.

15. Verfahren nach dem vorhergehenden Anspruch,
**dadurch gekennzeichnet, dass** eine Kombination mehrerer Techniken verwendet wird, wobei der Grundkörper (3) bevorzugt durch Tiefziehen, Streckziehen oder Druckeinwirkung, die Verbindung zwischen der Abschlussronde (1) und der Grundflächenunterseite des Grundkörpers (3) bevorzugt durch Schweißen, Löten und/oder Aufschlagen und die Bombierung der Abschlussronde (1) bevorzugt durch Pressen hergestellt wird.

16. Verwendung eines Kochgeschirrs nach einem der Ansprüche 1 bis 13 zur Zubereitung von Speisen oder zum Erhitzen von Lebensmitteln unter Einsatz eines Gasherdes, Elektroherdes oder Induktionsherdes.

## Claims

1. Cookware having
a basic body (3) and
a sealing disc (1) which is disposed on a base-side of the basic body and connected to the basic body in a form-fit, and also
an intermediate layer (2) which is disposed, at least in regions, between basic body and sealing disc,
wherein the sealing disc (1) consists of a different steel than the basic body (3),
wherein the basic body (3) and the sealing disc (1) consist of materials of which the coefficients of heat expansion differ from each other by at most 20.0%,
**characterized in that** the sealing disc (1) and the basic body (3) respectively comprise a base which has a concave bowing at a temperature of 20°C, the bowing being formed respectively such that the camber (4), in the temperature range of 50°C to 250°C, is at most 0.3 mm.

2. Cookware according to claim 1, **characterized in that** the basic body (3) and the sealing disc (1) consist of materials, of which the coefficients of heat expansion differ from each other by 0.0% to 10.0%, preferably by 0.0% to 6.0%.

3. Cookware according to any one of the preceding claims, **characterized in that** the coefficient of heat expansion of the basic body (3) and the coefficient of heat expansion of the sealing disc (1), at temperatures between 20°C and 200°C, are from 9.0·10⁻⁶ to 12.0·10⁻⁶ K⁻¹, preferably from 10.0·10⁻⁶ to 11.0·10⁻⁶ K⁻¹.

4. Cookware according to any one of the preceding claims, **characterized in that** the basic body (3) and the sealing disc (1) consist of a ferromagnetic stainless steel, preferably of a chromium-containing ferritic stainless steel, wherein the chromium content in the stainless steel of the basic body (3) and in the stainless steel of the sealing disc (1) is particularly preferably at least 15.5% by weight.

5. Cookware according to any one of the preceding claims, **characterized in that** the stainless steel of the basic body (3) has a chromium content of at least 20% by weight, wherein the stainless steel of the basic body is preferably a steel with the material number 1.4613 (X2CrTi24), 1.4622 (X2CrTiNbVCu22) and/or 1.4607 (X2CrNbTi20).

6. Cookware according to any one of the preceding claims, **characterized in that** the sealing disc (1) consists of a steel with the material number 1.4016 (X6Cr17), 1.4520 (X2CrTi17), 1.4510 (X3CrTi17), 1.4613 (X2CrTi24), 1.4622 (X2CrTiNbVCu22) and/or 1.4607 (X2CrNbTi20).

7. Cookware according to any one of the preceding claims, **characterized in that** the sealing disc (1) has a base and a bent or angled edge, wherein the base is a layer with a layer thickness of 0.4 to 1.0 mm.

8. Cookware according to any one of the preceding claims, **characterized in that** the intermediate layer (2) is a layer with a thickness of 2.0 to 10.0 mm, preferably of 4.0 to 8.0 mm, particularly preferably a predominantly flat and non-undulating or non-angled layer, the layer very particularly preferably being encapsulated between the sealing disc (1) and the basic body (3).

9. Cookware according to any one of the preceding claims, **characterized in that** the intermediate layer (2) consists of a material with a heat conductivity of at least 160 W/mK, preferably of at least 190 W/mK, in particular of a material selected from the group consisting of aluminum, copper, magnesium or an alloy of these elements.

10. Cookware according to any one of the preceding claims, **characterized in that** the cookware is a pot which is open on one side and has a cylindrical shape or a pan which is open on one side and has a cylindrical shape, wherein the pot or the pan preferably has a base with an oval, round or rectangular shape, and the base having particularly preferably an area of 150 to 1,200 cm^{2.}

11. Cookware according to any one of the preceding claims, **characterized in that** the basic body (3) of the cookware forms, at least in regions, a direct contact surface with the intermediate layer (2) and the intermediate layer (2) forms a direct contact surface with the sealing disc (1) on the side orientated away from the basic body (3).

12. Cookware according to any one of the preceding claims, **characterized in that** the bowing is formed respectively such that the camber (4), in the temperature range of 50°C to 250°C, is at most 0.2 mm.

13. Cookware according to any one of the preceding claims, **characterized in that** the cookware has, above 50°C, preferably in the temperature range of 50°C to 250°C, a base movement of at most 0.1 mm, in particular of at most 0.05 mm.

14. Method for the production of cookware according to any one of the preceding claims, in which firstly a cylindrical basic body (3) which is open on one side is produced from a chromium-containing ferritic stainless steel, and the basic body (3) is subsequently connected, on the underside of the base, at least in regions in a form-fit to a sealing disc (1), wherein an intermediate layer (2) is disposed between sealing disc and basic body at least in regions.

15. Method according to the preceding claim, **characterized in that** a combination of several techniques is used, wherein the basic body (3) is produced preferably by deep-drawing, stretch-drawing or pressure effect, the connection between the sealing disc (1) and the base underside of the basic body (3) is preferably produced by welding, soldering and/or striking, and the bowing of the sealing disc (1) is preferably produced by pressing.

16. Use of cookware according to any one of the claims 1 to 13 for preparing meals or for heating food using a gas cooker, electric cooker or induction cooker.

## Revendications

1. Ustensile de cuisson, comprenant
un corps de base (3), et
un flan circulaire d'extrémité (1) agencé sur un côté de base du corps de base et relié par complémentarité de formes au corps de base, ainsi
qu'une couche intermédiaire (2) agencée au moins par endroits entre le corps de base et le flan circulaire d'extrémité,
dans lequel le flan circulaire d'extrémité (1) est constitué d'un acier différent de celui du corps de base (3),
dans lequel le corps de base (3) et le flan circulaire d'extrémité (1) sont constitués de matériaux dont les coefficients de dilatation thermique diffèrent l'un de l'autre d'un maximum de 20,0 %,
**caractérisé en ce que** le flan circulaire d'extrémité (1) et le corps de base (3) comprennent chacun une zone de base qui présente un bombé concave à une température de 20°C, le bombé étant respectivement si prononcé que la flèche (4), dans la plage de température de 50°C à 250°C, est au maximum de 0,3 mm.

2. Ustensile de cuisson selon la revendication 1,
**caractérisé en ce que** le corps de base (3) et le flan circulaire d'extrémité (1) sont constitués de matériaux dont les coefficients de dilatation thermique diffèrent entre eux de 0,0 % à 10,0 %, de préférence de 0,0 % à 6,0 %.

3. Ustensile de cuisson selon l'une quelconque des revendications précédentes,
**caractérisé en ce que** le coefficient de dilatation thermique du corps de base (3) et le coefficient de dilatation thermique du flan circulaire d'extrémité (1) à des températures comprises entre 20°C et 200°C sont de 9,0·10⁻⁶ à 12,0·10⁻⁶ K¹, de préférence de 10,0·10⁻⁶ à 11,0·10⁻⁶ K1.

4. Ustensile de cuisson selon l'une quelconque des revendications précédentes,
**caractérisé en ce que** le corps de base (3) et le flan circulaire d'extrémité (1) sont constitués d'un acier inoxydable ferromagnétique, de préférence d'un acier inoxydable ferritique contenant du chrome, dans lequel la teneur en chrome dans l'acier inoxydable du corps de base (3) et dans l'acier inoxydable du flan circulaire d'extrémité (1) est particulièrement préférée d'au moins 15,5 % en poids.

5. Ustensile de cuisson selon l'une quelconque des revendications précédentes,
**caractérisé en ce que** l'acier inoxydable du corps de base (3) présente une teneur en chrome d'au moins 20 % en poids, dans lequel l'acier inoxydable du corps de base (3) est de préférence un acier portant le numéro de matériau 1.4613 (X2CrTi24), 1.4622 (X2CrTiN-bVCu22) et/ou 1.4607 (X2CrNbTi20).

6. Ustensile de cuisson selon l'une quelconque des revendications précédentes,
**caractérisé en ce que** le flan circulaire d'extrémité (1) est réalisé en un acier portant le numéro de matériau 1.4016 (X6Cr17), 1.4520 (X2CrTi17), 1.4510 (X3CrTi17), 1.4613 (X2CrTi24), 1.4622 (X2CrTiNbVCu22) et/ou 1.4607 (X2CrNbTi20).

7. Ustensile de cuisson selon l'une quelconque des revendications précédentes,
**caractérisé en ce que** le flan circulaire d'extrémité (1) présente une surface de base et un bord incurvé ou incliné, dans lequel la surface de base est une couche d'une épaisseur de couche de 0,4 à 1,0 mm.

8. Ustensile de cuisson selon l'une quelconque des revendications précédentes,
**caractérisé en ce que** la couche intermédiaire (2) est une couche d'une épaisseur de 2,0 à 10,0 mm, de préférence de 4,0 à 8,0 mm, de manière particulièrement préférée une couche principalement plate et non ondulée ou inclinée, dans lequel la couche est de préférence encapsulée entre le flan circulaire d'extrémité (1) et le corps de base (3).

9. Ustensile de cuisson selon l'une quelconque des revendications précédentes,
**caractérisé en ce que** la couche intermédiaire (2) est réalisée en un matériau présentant une conductivité thermique d'au moins 160 W/mK, de préférence d'au moins 190 W/mK, notamment en un matériau choisi dans le groupe constitué par l'aluminium, le cuivre, le magnésium ou un alliage de ces éléments.

10. Ustensile de cuisson selon l'une quelconque des revendications précédentes,
**caractérisé en ce que** l'ustensile de cuisson est une casserole de forme cylindrique ouverte d'un côté ou une poêle de forme cylindrique ouverte d'un côté, dans lequel la casserole ou la poêle présente de préférence une surface de base de forme ovale, ronde ou rectangulaire et la surface de base présente de manière particulièrement préférée une aire de 150 à 1200 cm².

11. Ustensile de cuisson selon l'une quelconque des revendications précédentes,
**caractérisé en ce que** le corps de base (3) de l'ustensile de cuisson forme, au moins par endroits, une surface de contact direct avec la couche intermédiaire (2) et la couche intermédiaire (2) forme une surface de contact direct avec la plaque d'extrémité (1) avec le côté opposé au corps de base (3).

12. Ustensile de cuisson selon l'une quelconque des revendications précédentes,
**caractérisé en ce que** le bombé est respectivement si prononcé que la flèche (4) est au maximum de 0,2 mm dans la plage de température de 50°C à 250°C.

13. Ustensile de cuisson selon l'une quelconque des revendications précédentes,
**caractérisé en ce que** l'ustensile de cuisson présente un déplacement de fond d'un maximum de 0,1 mm, en particulier d'un maximum de 0,05 mm, au-dessus de 50°C, de préférence dans la plage de température de 50°C à 250°C.

14. Procédé de fabrication d'un ustensile de cuisson selon l'une des revendications précédentes, dans lequel un corps de base cylindrique (3) ouvert d'un côté est d'abord fabriqué à partir d'un acier inoxydable ferritique contenant du chrome, et le corps de base (3) est ensuite relié, au niveau de la face inférieure de la surface de base, au moins par endroits, par complémentarité à un flan d'extrémité (1), dans lequel une couche intermédiaire (2) est agencée au moins par endroits entre le flan circulaire d'extrémité et le corps de base.

15. Procédé selon la revendication précédente,
**caractérisé en ce qu'**une combinaison de plusieurs techniques est utilisée, dans lequel le corps de base (3) est réalisé de préférence par emboutissage profond, étirage ou pression, et la liaison entre le flan circulaire d'extrémité (1) et la face inférieure de la surface de base du corps de base (3) est de préférence réalisé par soudage, brasage et/ou matriçage, et le bombé du flan circulaire d'extrémité (1) est de préférence réalisé par emboutissage.

16. Utilisation d'un ustensile de cuisson selon l'une quelconque des revendications 1 à 13 pour préparer des aliments ou pour réchauffer des aliments à l'aide d'une cuisinière à gaz, d'une cuisinière électrique ou d'une cuisinière à induction.
